# EUROPÄISCHE PATENTANMELDUNG

(11) **EP 2 103 932 A1**
(43) Veröffentlichungstag der Anmeldung: **23.09.2009**
(21) Anmeldenummer: 08168849.1
(22) Anmeldetag: 11.11.2008
(51) Int. Cl.: G01N 29/265, G01N 29/22, G01N 27/90, G01N 35/00

(54) **Wandleranordnung für ein System zur zerstörungsfreien Werkstoffprüfung**

(30) Priorität: 20.03.2008 DE 102008015237
(71) Anmelder: Siemens Aktiengesellschaft, 80333 München (DE)
(72) Erfinder: Götz, Jürgen, 91315 Höchstadt/Aisch (DE); Hain, Stefan, 91090 Effeltrich (DE); Mooshofer, Hubert Dr., 80538 München (DE); Ostermaier, Jochen, 91056 Erlangen (DE); de Carvalho Ferreira, Fabricio, 91052 Erlangen (DE)

(57) **Zusammenfassung**

Es wird eine Wandleranordnung für ein Ultraschallsystem zur zerstörungsfreien Werkstoffprüfung angegeben, wobei das System eine Mehrzahl von Ultraschallwandlern aufweist, die linear bewegbar oder schwenkbar entlang einer Bahnkurve sind. Ziel ist es, eine Mehrzahl von Ultraschallwandlern auf einen Punkt eines Prüflings auszurichten. Wenn Größe und der Fokusabstand der Wandler eine ringförmige oder ähnliche Anordnung verbieten, werden die Wandler in kleinere Gruppen aufgeteilt. Sie werden dann so angeordnet, dass bei der Bewegung der Wandler entlang der Bahnkurve jeder Wandler jeden gewünschten Fokuspunkt auf dem Prüfling überstreicht.

## Beschreibung

Die Erfindung betrifft das Gebiet der zerstörungsfreien Werkstoffprüfung. Für diese gibt es eine Reihe von Möglichkeiten. So kann beispielsweise mit Sensoren Strahlung wie beispielsweise Wärmestrahlung von einem zu testenden Prüfling empfangen und ausgewertet werden. Dabei wird die Oberfläche des Prüflings beispielsweise abgetastet. Es ist auch möglich, die Strahlung auszusenden und einen reflektierten Anteil dieser Strahlung wieder zu empfangen und auszuwerten. Bei der Strahlung kann es sich um elektromagnetische Strahlung oder auch um Schallwellen wie beispielsweise Ultraschall handeln. Die Erfindung befasst sich dabei insbesondere mit einem Ultraschall-Wandlersystem, ist aber auch für andere Sorten von Strahlung anwendbar. In weiteren Text wird für einen jeweiligen Sensor oder eine Kombination aus einem Sensor und einem Emitter für die Strahlung der Begriff Wandler verwendet. So kann beispielsweise Ultraschall-Wandler einen reinen Ultraschall-Sensor oder ein Bauteil, das sowohl als UltraschallSender wie auch als Ultraschall-Empfänger arbeitet bezeichnen.

Je nach Art der verwendeten Strahlung kann es notwendig sein, einen bestimmten Abstand des oder der Wandler von der Oberfläche des Prüflings einzuhalten. Weiterhin kann es je nach Art der verwendeten Strahlung notwendig sein, einen bestimmten Winkel zur Oberfläche des Prüflings einzuhalten. Bei gekrümmten Oberflächen wie beispielsweise halbkugelförmigen Enden eines Stabs ist hierzu zumindest ein Schwenksystem nötig, das den oder die Wandler um eine oder mehrere Schwenkachsen /Drehpunkte drehen kann. Bei einer Prüfung der Oberfläche eines Prüflings, die zumindest entlang einer Koordinate im Wesentlichen geradlinig ist, kommt ein ein- oder mehrachsiges lineares Bewegungssystem zum Einsatz.

Sollen beispielsweise besonders kleine Defekte im Material des Prüflings detektiert werden, d.h. bei einer hohen geforderten Genauigkeit der Prüfung, ist es zweckmäßig, mit mehreren Wandlern eine Prüfung vorzunehmen, wobei die Wandler aus verschiedenen Richtungen auf die Oberfläche des Prüflings gerichtet sind. Weiterhin ist es zweckmäßig, die Wandler so auszugestalten, dass ihr Strahl möglichst fokussiert auf die Oberfläche des Prüflings trifft, d.h. auf eine möglichst kleine Fläche dort fokussiert ist, idealisiert also auf einen Punkt. Hierzu bietet sich beispielsweise eine ringförmige Anordnung der beispielsweise acht oder 16 Wandler an, wobei die Wandler alle auf einen Punkt ausgerichtet sind. Der Abstand der Wandler vom Punkt beträgt dabei beispielsweise im Falle von Ultraschallwandlern nur wenige cm. Da die Wandler selbst typischerweise zumindest im Bereich einiger mm groß sind, kann die beschriebene Anordnung mechanisch unmöglich sein.

Eine Veränderung des Fokusabstands führt jedoch in der Regel zu einem größeren Wandlerdurchmesser bzw. eine Verkleinerung des Wandlerdurchmessers umgekehrt zu einer Verkleinerung des Fokusabstandes. Eine Veränderung des Abstands verschlechtert den Fokus des Strahls der Wandler und damit die Genauigkeit. Eine weitere Möglichkeit zur Lösung dieses Problems wäre eine sequentielle mehrfache Abtastung des Prüflings, wobei zwischen den Abtastungen die Lage der Wandler geändert wird. Dies führt jedoch zu einem erheblich erhöhten Zeitaufwand für die vollständige Prüfung.

Es ist Aufgabe der vorliegenden Erfindung, eine Einrichtung zur zerstörungsfreien Werkstoffprüfung und ein Verfahren zur zerstörungsfreien Werkstoffprüfung anzugeben, womit die oben genannten Probleme vermieden werden, d.h. womit eine Prüfung mit hoher Geschwindigkeit und Genauigkeit ermöglicht wird. Diese Aufgabe wird durch eine Einrichtung mit den Merkmalen von Anspruch 1 und ein Verfahren mit den Merkmalen von Anspruch 6 gelöst. Die abhängigen Ansprüche betreffen vorteilhafte Ausgestaltungen und Weiterbildungen der Erfindung.

Die erfindungsgemäße Einrichtung zur zerstörungsfreien Werkstoffprüfung weist wenigstens zwei Gruppen von jeweils wenigstens einem Wandler, beispielsweise Ultraschall-Wandler auf. Dabei sind die Wandler einer ersten Gruppe auf einen ersten Punkt fokussiert sind und die die jeweiligen Wandler weiterer Gruppen auf einen jeweiligen weiteren, vom ersten verschiedenen Punkt. Weiterhin sind die Wandler entlang einer Bahnkurve bewegbar angeordnet, beispielsweise über eine lineares ein- oder mehrachsiges Bewegungssystem und/oder ein Schwenksystem. Schließlich sind die Wandler derart angeordnet, dass bei einer Bewegung entlang der Bahnkurve für jede der weiteren Gruppen eine Position erreichbar ist, bei der die Wandler der Gruppe auf den ersten Punkt fokussiert sind. Die Wandler sind dabei insbesondere zur gemeinsamen Bewegung in einem Sensorhalter angeordnet.

Bei dem erfindungsgemäßen Verfahren zur zerstörungsfreien Werkstoffprüfung wird eine Einrichtung zur zerstörungsfreien Werkstoffprüfung mit wenigstens zwei Gruppen von jeweils wenigstens einem Wandler verwendet. Dabei werden die Wandler entlang einer Bahnkurve bewegt, um einen Prüfling abzutasten. Die Wandler einer ersten Gruppe sind dabei zu einem ersten Zeitpunkt auf einen ersten Punkt fokussiert, während für jede der weiteren Gruppen zu weiteren Zeitpunkten die Wandler der Gruppe auf den ersten Punkt fokussiert sind.

Mit anderen Worten sind die Wandler der Einrichtung zerstörungsfreien Werkstoffprüfung in Gruppen aufgeteilt und dabei so angeordnet, dass sie bei Abfahren der Bahnkurve, beispielsweise zur Abtastung der Oberfläche eines Prüflings nacheinander anstatt gleichzeitig einen jeweiligen Punkt der Oberfläche überstreichen. Dadurch wird eine Prüfung der Oberfläche mit einer gewünschten hohen Genauigkeit ermöglicht, auch wenn die Wandler nicht so anzuordnen sind, dass eine gleichzeitige Prüfung eines jeweiligen Punkts der Oberfläche möglich ist. So können auch die am besten geeigneten Wandler eingesetzt werden.

Bei der Bahnkurve kann es sich beispielsweise um eine geradlinige Bahn oder um eine kreisförmige Bahn handeln. Es ist zweckmäßig, wenn die Bahnkurve so gestaltet ist, dass sie der Oberfläche des Prüflings im Wesentlichen folgt, so dass die Wandler einen bestimmten Abstand zur Oberfläche einhalten. Bevorzugt wird als Länge der Bahnkurve im Wesentlichen die Ausdehnung des Prüflings entlang der Bahnkurve verwendet wird, verlängert um eine Wegstrecke, die dem Abstand des entlang der Bahnkurve vordersten und hintersten Wandlers entspricht. Die Bahnkurve ist vorteilhaft am kürzesten, wenn die Wandler derart angeordnet, dass der Abstand des entlang der Bahnkurve vordersten und hintersten Wandlers minimal ist.

Zwischen zwei Messungen werden die Wandler zweckmäßig um einen bestimmten Messabstand entlang der Bahnkurve verschoben. Vorteilhaft ist es, wenn die Gruppen bzw. der jeweilige Fokus-Punkt der Gruppen um eine Strecke gegeneinander entlang der Bahnkurve verschoben angeordnet sind, die einem Vielfachen des Messabstands entspricht. Auf diese Weise wird erreicht, dass für eine bestimmte Menge von Punkten der Oberfläche Messungen von allen Wandlern vorhanden sind, die sich vorteilhaft kombinieren lassen.

Weitere Vorteile und Einzelheiten der Erfindung werden anhand des in der Zeichnung dargestellten Ausführungsbeispiels erläutert. Dabei zeigen die Figuren 1 und 2 schematisch eine Wandleranordnung zur Abtastung entlang einer geradlinigen Bahn und Figur 3 schematisch eine Wandleranordnung zur Abtastung entlang einer Kreisbahn.

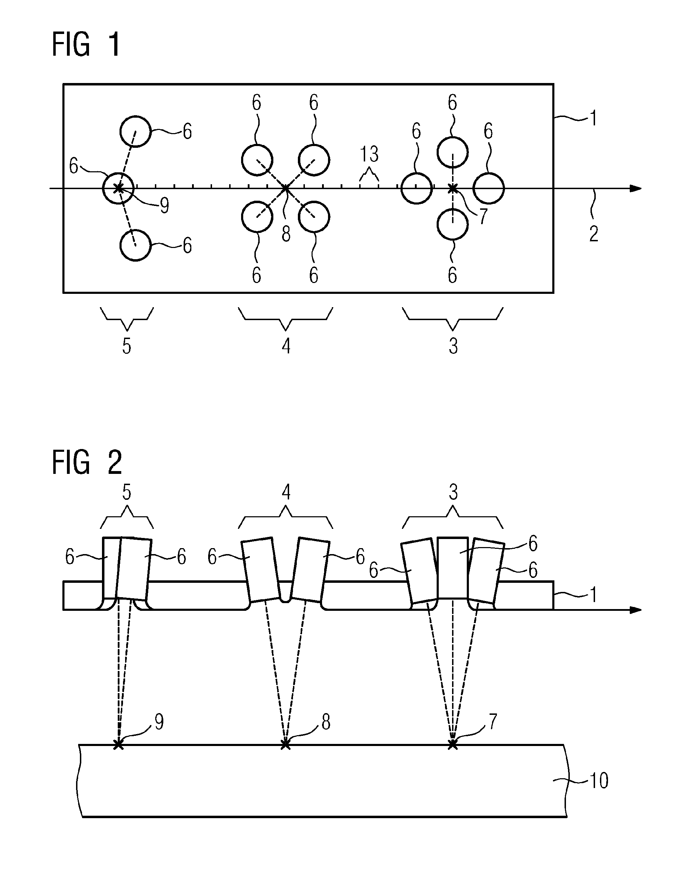

Die erste beispielhafte Ausführungsform der Erfindung umfasst einen Sensorhalter 1. Dieser ist ausgestaltet, um eine im Wesentlichen geradlinige Oberfläche eines Prüflings 10 abzutasten. Der Prüfling 10 kann also beispielsweise eine Platte oder ein Zylinder, beispielsweise ein Rohr sein. Der Sensorhalter 1 umfasst elf Ultraschallwandler 6, die sowohl als Ultraschall-Emitter als auch als Ultraschall-Sensor arbeiten. Fig. 1 zeigt den Sensorhalter 1 in Draufsicht und Fig.2 in einer Seitenansicht. In Fig.2 ist auch schematisch der Prüfling 10 angedeutet, in diesem Beispiel ein Rohr, das der Länge nach abgetastet wird. Ein Pfeil in den Fig.1 und 2 deutet dabei die geradlinige Bahn 2 an, auf der der Sensorhalter 1 bewegt wird, um den Prüfling 10 abzutasten. Die Ultraschallwandler 6 sind in etwa zylindrisch und deshalb in der Draufsicht als Kreise angedeutet.

Die Ultraschallwandler 6 sind aufgeteilt in drei Gruppen 3, 4, 5. Die erste und zweite Gruppe 3, 4 umfassen jeweils vier der Ultraschallwandler 6, die dritte Gruppe 5 drei Ultraschallwandler 6. Die zweite Gruppe 4 ist gegenüber der ersten Gruppe 3 um einen Abstand von etwa 450% des Durchmessers der Ultraschallwandler 6 entlang der geradlinigen Bahn 2 verschoben. Die dritte Gruppe 5 ist gegenüber der zweiten Gruppe 4 ebenso verschoben.

Die Ultraschallwandler 6 der ersten Gruppe 3 sind dabei an den Ecken eines Quadrats angeordnet, wobei das Quadrat relativ zur geradlinigen Bahn 2 um 45° gedreht ist. D.h., zwei der Ultraschallwandler 6 der ersten Gruppe sind mittig auf dem Sensorhalter 1 angeordnet und folgen einander auf der geradlinigen Bahn 2, während die anderen zwei Ultraschallwandler 6 der ersten Gruppe 3 abseits der Mitte des Sensorhalters 1 und bezüglich der geradlinigen Bahn 2 auf gleicher Höhe angeordnet sind. Der Abstand der Ultraschallwandler 6 voneinander entspricht dabei etwa 120% des ihres Durchmessers.

Die Ultraschallwandler 6 der zweiten Gruppe 4 sind ebenfalls an den Ecken eines Quadrats angeordnet, wobei das Quadrat relativ zur geradlinigen Bahn 2 nicht gedreht ist. D.h., alle vier Ultraschallwandler 6 der zweiten Gruppe sind um die gleiche Entfernung, etwa 60% des Durchmessers der Ultraschallwandler 6 versetzt von der Mitte des Sensorhalters 1 bzgl. der geradlinigen Bahn 2 angeordnet, jeweils zwei auf der einen und auf der anderen Seite. Dabei sind jeweils zwei der Ultraschallwandler 6 bezüglich der geradlinigen Bahn 2 auf gleicher Höhe angeordnet. Der Abstand der Ultraschallwandler 6 voneinander entspricht dabei wiederum etwa 120% des ihres Durchmessers.

Einer der Ultraschallwandler 6 der dritten Gruppe 5 ist genau mittig bezüglich der geradlinigen Bahn 2 angeordnet. Die beiden weiteren Ultraschallwandler 6 der dritten Gruppe 5 sind um die gleiche Entfernung, etwa 200% des Durchmessers der Ultraschallwandler 6 versetzt von der Mitte des Sensorhalters 1 bzgl. der geradlinigen Bahn 2 angeordnet, jeweils einer auf der einen und auf der anderen Seite. Die beiden letzteren Ultraschallwandler 6 sind entlang der geradlinigen Bahn 2 leicht versetzt zum ersten Ultraschallwandler 6 der dritten Gruppe 5 angeordnet.

Die Ultraschallwandler 6 der ersten Gruppe 3 sind dabei so angeordnet, d.h. verkippt eingebaut in den Sensorhalter 1, dass sie auf einen ersten Fokus-Punkt 7 eingestellt sind. Ihr Ultraschall-Strahl trifft daher mit möglichst optimalem Fokus im Punkt 7 ein. Die Ultraschallwandler 6 der zweiten Gruppe 4 sind so angeordnet, d.h. verkippt eingebaut in den Sensorhalter 1, dass sie auf einen zweiten Fokus-Punkt 8 eingestellt sind. Die Ultraschallwandler 6 der dritten Gruppe 5 sind dabei so angeordnet, d.h. teilweise verkippt eingebaut in den Sensorhalter 1, dass sie auf einen Punkt 9 eingestellt sind. Wird der Sensorhalter so geführt, dass die Oberfläche des Prüflings 10 durch die Fokus-Punkte 7, 8, 9 geht, so ist eine optimale Genauigkeit der Prüfung gegeben. Der Sensorhalter 1 wird dabei zweckmäßig so über die Länge des Prüflings 10 hinaus geführt, dass alle Ultraschallwandler 6 aller Gruppen 3, 4, 5 die gesamte gewünschte Länge des Prüflings abtasten.

Wird nun der Prüfling 10 abgetastet, so bewegt sich der Sensorhalter 1 entlang der geradlinigen Bahn 2 über den Prüfling 10 hinweg. Die Ultraschallwandler 6 der ersten Gruppe 3 überstreichen dabei im Laufe der Bewegung einen bestimmten Punkt der Oberfläche des Prüflings 10. Kurze Zeit danach überstreichen auch die die Ultraschallwandler 6 der zweiten Gruppe 4 diesen Punkt, ebenso wie nochmals kurze Zeit später die Ultraschallwandler 6 der dritten Gruppe 5. Besonders vorteilhaft ist es, wenn der Abstand der Gruppen 3, 4, 5 voneinander, insbesondere der Abstand der Fokus-Punkte 7, 8, 9 voneinander, ein Vielfaches des Messabstands 13 beträgt. Im gegeben ersten Ausführungsbeispiel sind die Gruppen 3, 4, 5 um das neunfache des Messabstands 13 gegeneinander verschoben. Dadurch wird erreicht, dass für einen Punkt der Oberfläche des Prüflings 10, für den die erste Gruppe 3 Messwerte erzeugt hat, auch die weiteren Gruppen 4, 5 Messwerte erzeugen werden. Somit werden für die Punkte der Oberfläche des Prüflings 10, die abgetastet werden, Messwerte erzeugt, bei denen die Ultraschallwandler 6 beispielsweise ringförmig um den Punkt angeordnet sind und in einem gewünschten Winkel einstrahlen, obwohl eine Anordnung der Ultraschallwandler 6 auf diesem Ring, wobei alle Ultraschallwandler 6 auf denselben Fokus-Punkt 7, 8, 9 ausgerichtet sind, aufgrund ihrer Größe unmöglich ist. Gleichzeitig wird die Abtastung der Oberfläche in einem Durchlauf ermöglicht.

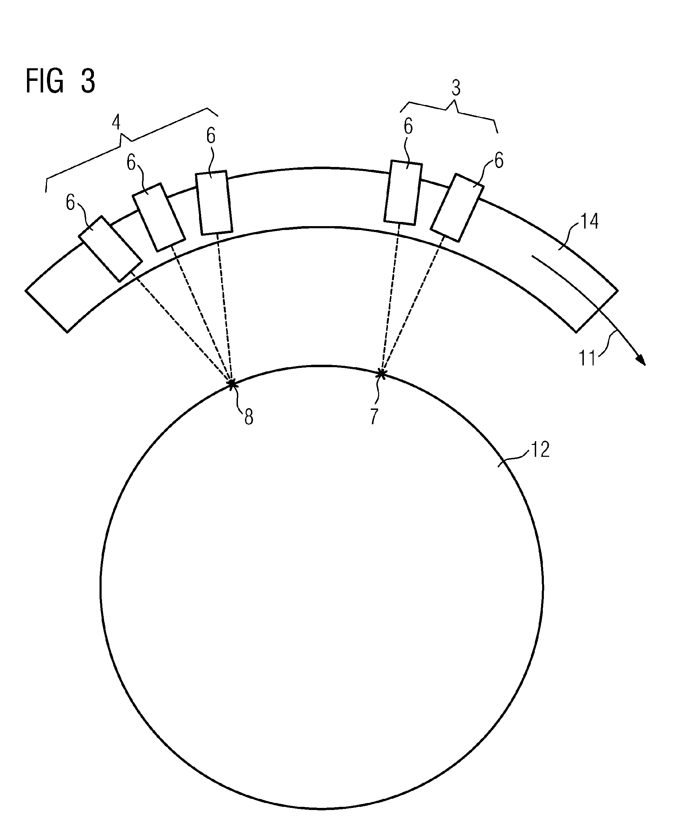

Ein zweites Ausführungsbeispiel für die Erfindung ist in Fig. 3 skizziert. Der Sensorhalter 14 ist in diesem Beispiel als Kreisbogen ausgestaltet und dient dazu, einen runden, beispielsweise zylindrischen oder kugelförmigen Prüfling 12 abzutasten. dazu wird der Sensorhalter 14 auf einer kreisförmigen Bahn 11 um den Prüfling 12 herum bewegt. Der Sensorhalter 14 weist zwei Gruppen 3, 4 von insgesamt fünf Ultraschallwandlern 6 auf. Die zwei Ultraschallwandler 6 der ersten Gruppe 3 sind dabei auf einen ersten Fokus-Punkt 7 und die drei Ultraschallwandler 6 der zweiten Gruppe 4 auf einen zweiten Fokus-Punkt 8 ausgerichtet. Die Anordnung der Ultraschallwandler 6 und die Ausrichtung auf die Fokus-Punkt 7, 8 ist dabei dergestalt, dass bei der Bewegung des Sensorhalter 14 auf der kreisförmigen Bahn 11 von den Ultraschallwandlern 6 wiederum gleiche Punkte überstrichen werden, so dass die gleichen Vorteile erzielt werden wie für die geradlinige Bahn 2.

Für die komplette Abtastung eines halbkugelförmigen Prüflings 12 gibt es hierbei mehrere Möglichkeiten: So kann der Sensorhalter 14 immer so gefahren werden, dass ein Viertelkreis der Oberfläche des Prüflings 12 abgetastet wird und der Prüfling insgesamt um 360° gedreht werden, um die gesamte Halbkugel abzutasten. Ebenfalls möglich ist es, einen Halbkreis zu fahren und den Prüfling insgesamt um 180° zu drehen. Eine dritte Variante ergibt sich dadurch, dass beim Schwenken des Sensorhalters 14 um 90° ein Teil der Ultraschallwandler 6 einen Bereich von mehr als einem Viertelkreis der Oberfläche abtastet. Diese zusätzlichen Daten können zu einer Erhöhung der Genauigkeit der Messung verwendet werden, da zumindest für einen Teil der Oberfläche des Prüflings somit zusätzliche Daten zur Verfügung stehen.

## Patentansprüche

1. Einrichtung zur zerstörungsfreien Werkstoffprüfung mit wenigstens zwei Gruppen von jeweils wenigstens einem Wandler, bei der:
- die Wandler einer ersten Gruppe auf einen ersten Punkt fokussiert sind.
- die jeweiligen Wandler weiterer Gruppen auf einen jeweiligen weiteren, vom ersten verschiedenen Punkt fokussiert sind;
- die Wandler entlang einer Bahnkurve bewegbar angeordnet sind,
- die Wandler derart angeordnet sind, dass bei einer Bewegung entlang der Bahnkurve für jede der weiteren Gruppen eine Position erreichbar ist, bei der die Wandler der Gruppe auf den ersten Punkt fokussiert sind.

2. Einrichtung gemäß Anspruch 1, bei der es sich bei der Bahnkurve um eine geradlinige Bahn oder um einen Kreis handelt.

3. Einrichtung gemäß Anspruch 1 oder 2, bei der zwischen zwei Messungen die Wandler um einen Messabstand entlang der Bahnkurve verschoben werden und bei der die Gruppen um eine Strecke gegeneinander entlang der Bahnkurve verschoben angeordnet sind, die einem Vielfachen des Messabstands entspricht.

4. Einrichtung gemäß einem der vorangehenden Ansprüche, bei der die Wandler derart angeordnet sind, dass der Abstand des entlang der Bahnkurve vordersten und hintersten Wandlers minimal ist.

5. Einrichtung gemäß einem der vorangehenden Ansprüche, bei der die Wandler Ultraschall-Wandler sind.

6. Verfahren zur zerstörungsfreien Werkstoffprüfung, bei dem eine Einrichtung zur zerstörungsfreien Werkstoffprüfung mit wenigstens zwei Gruppen von jeweils wenigstens einem Wandler verwendet wird und bei dem die Wandler entlang einer Bahnkurve bewegt werden, um einen Prüfling abzutasten, wobei
- die Wandler einer ersten Gruppe zu einem ersten Zeitpunkt auf einen ersten Punkt fokussiert sind,
- für jede der weiteren Gruppen zu weiteren Zeitpunkten die Wandler der Gruppe auf den ersten Punkt fokussiert sind.

7. Verfahren gemäß Anspruch 6, bei dem als Länge der Bahnkurve die Ausdehnung des Prüflings entlang der Bahnkurve verwendet wird, verlängert um eine Wegstrecke, die dem Abstand des entlang der Bahnkurve vordersten und hintersten Wandlers entspricht.

8. Verfahren gemäß Anspruch 6 oder 7, bei dem eine geradlinige Bahnkurve oder eine kreisförmige Bahnkurve verwendet wird.

9. Verfahren gemäß einem der Ansprüche 6 bis 8, bei dem eine Einrichtung gemäß einem der Ansprüche 1 bis 5 verwendet wird.
